# EUROPÄISCHE PATENTSCHRIFT

(11) **EP 3 792 008 B1**
(45) Veröffentlichungstag und Bekanntmachung des Hinweises auf die Patenterteilung: **01.05.2024**
(21) Anmeldenummer: 20197560.4
(22) Anmeldetag: 12.09.2019
(51) Int. Cl.: B25F 5/02

(54) **HANDGEFÜHRTES ARBEITSGERÄT MIT EINEM WERKZEUG**
HAND-GUIDED APPLIANCE WITH A TOOL
APPAREIL DE TRAVAIL PORTATIF DOTÉ D'UN OUTIL

(43) Veröffentlichungstag der Anmeldung: 17.03.2021
(62) Teilanmeldung aus: 19197112.6
(73) Patentinhaber: Andreas Stihl AG & Co. KG, 71336 Waiblingen (DE)
(72) Erfinder: OBERHOFER, Felix, 70327 Stuttgart (DE); JENKE, Marcus, 71263 Weil der Stadt (DE); KERN, Franziska, 70825 Korntal-Münchingen (DE); MAIER, Thomas, 73760 Ostfildern (DE); MANN, Verena, 73630 Remshalden (DE); BATHKE, Lars, 73635 Rudersberg (DE); MANDEL, Roland, 70329 Stuttgart (DE); POSNER, Benedikt, 70567 Stuttgart (DE)
(74) Vertreter: Karzel, Philipp

(56) Entgegenhaltungen:
- EP-A2- 2 202 035
- US-A- 5 988 241
- US-A1- 2013 161 161

## Beschreibung

Die Erfindung betrifft ein handgeführtes Arbeitsgerät mit einem Werkzeug.

Es sind handgeführte Arbeitsgeräte bekannt, deren Betätigungshebel zur Betätigung eines Antriebsmotors durch eine Sicherheitseinrichtung, beispielsweise einen Sperrhebel, gesperrt ist. Um den Antriebsmotor zu betätigen, sind daher der Sperrhebel und der Betätigungshebel nacheinander oder zumindest gleichzeitig zu drücken. Die Anordnung der Hebel ist üblicherweise so gewählt, dass es dem Bediener möglich ist, beide Hebel mit nur einer Hand zu drücken. Nachteilig an derartigen Arbeitsgeräten ist, dass die Betätigung beider Hebel zur gleichen Zeit oftmals unkomfortabel und nur wenig intuitiv ist. Ggfs. muss der Bediener sogar seine feste Handhaltung am Handgriff des Arbeitsgerätes aufgeben, um beide Hebel gleichzeitig drücken zu können.

Aus der US 5,988,241 A1 ist eine Oberfräse gemäß dem Oberbegriff des Anspruchs 1 bekannt, die einen Handgriff mit Sperrhebel offenbart. Der Sperrhebel ist auf einem Bolzen in etwa achsparallel zur Längsachse des Handgriffes gelagert.

Aus der US 2013/0161161 A1 ist ein tragbares Arbeitsgerät mit einem Sperrhebel gezeigt, wobei der Sperrhebel in zwei Stellungen zur Freigabe eines Betätigungshebels verschwenkbar ist. Die Drehachse des Sperrhebels liegt achsparallel zur Längsachse des Handgriffes.

Der Erfindung liegt die Aufgabe zugrunde, ein handgeführtes Arbeitsgerät derart weiterzubilden, dass eine ergonomische Bedienung des Arbeitsgerätes für den Bediener ermöglicht wird.

Diese Aufgabe wird durch ein Arbeitsgerät gemäß Anspruch 1 gelöst.

Das handgeführte Arbeitsgerät umfasst einen Handgriff, wobei der Handgriff eine Längsachse aufweist. Der Sperrhebel ist um eine Drehachse des Sperrhebels schwenkbar gelagert. Das Arbeitsgerät umfasst eine Längsebene, wobei die Längsebene die Längsachse des Handgriffes enthält und parallel zur Drehachse des Sperrhebels verläuft. Die Längsebene verläuft dabei auch dann parallel zur Drehachse des Sperrhebels, wenn die Drehachse des Sperrhebels in der Längsebene liegt. Die Längsachse des Handgriffes schließt mit der Drehachse des Sperrhebels in Blickrichtung senkrecht auf die Längsebene einen Winkel ein, wobei der Winkel in einem Bereich von 10° bis 60° liegt.

Bei der Bedienung des Arbeitsgerätes hält der Bediener das Arbeitsgerät an dessen Handgriff fest. In dieser Handstellung ist es dem Bediener möglich, den Daumen und zumindest den Zeigefinger frei zu bewegen. Sperrhebel und Betätigungshebel sind vorteilhaft derart angeordnet, dass der Sperrhebel mit dem Daumen gedrückt werden kann und der dadurch entsperrte Betätigungshebel anschließend mit dem Zeigefinger oder einem anderen freien Finger betätigt werden kann.

Der Erfindung liegt die Erkenntnis zugrunde, dass es für den Bediener ergonomisch ist, wenn der Bediener seinen Daumen beim Halten des Handgriffes des Arbeitsgerätes lediglich schwenken muss. Durch die erfindungsgemäße Anordnung von Längsachse des Handgriffs und Drehachse des Sperrhebels ist eine Betätigung mit einer reinen Schwenkbewegung des Daumens gegenüber der Hand möglich. Eine Bewegung des Daumens in Längsrichtung kann dadurch vermieden werden. Bei einer Anordnung der Drehachse des Sperrhebels parallel zur Längsachse des Handgriffes könnte der Daumen bei einer Schwenkbewegung vom Sperrhebel abgleiten. Um dies zu vermeiden, müsste der Bediener seinen Daumen in Längsrichtung nach vorne zum Sperrhebel schieben, wodurch der Bediener seine feste Handhaltung am Handgriff des Arbeitsgerätes aufgeben müsste.

Durch die erfindungsgemäße Winkelstellung zwischen der Drehachse des Sperrhebels und der Längsachse des Handgriffes kann der Sperrhebel durch den Daumen im Rahmen der natürlichen Schwenkbewegung des Daumens betätigt werden. Ein Ausgleich der Daumenbewegung durch eine Bewegung in Längsrichtung des Handgriffes ist nicht notwendig. Eine ergonomische Betätigung des Sperrhebels sowie eine ergonomische Benutzung des Arbeitsgerätes sind ermöglicht.

Der Winkel liegt vorzugsweise in einem Bereich von 15° bis 45°. Dadurch wird eine besonders ergonomische Betätigung ermöglicht.

Bei besonders gekrümmten Handgriffen ist die Längsachse eine Tangente an die Mittellinie des Handgriffes. Die Tangente liegt an der Mittellinie am vorderen Ende des Handgriffes an. Die Mittellinie verläuft durch die Flächenschwerpunkte der einzelnen parallel zueinander liegenden Querschnittsebenen des Handgriffes.

Es ist vorteilhaft vorgesehen, dass eine Federeinheit für den Sperrhebel mit einer Kontur am Sperrhebel zusammenwirkt, wobei sich die Kontur über einen Winkelabschnitt um die Drehachse des Sperrhebels erstreckt und einen in Richtung auf die Drehachse des Sperrhebels hin ausgebildeten unteren Abschnitt aufweist. Es ist insbesondere vorgesehen, dass die Federeinheit in dem unteren Abschnitt der Kontur anliegend den Sperrhebel in Richtung der Sperrstellung vorspannt.

Wird der Sperrhebel betätigt, dreht sich dieser um seine Drehachse des Sperrhebels, wobei die Federeinheit durch die Kontur des Sperrhebels in Richtung weg von der Drehachse des Sperrhebels ausgelenkt wird. Die Federeinheit übt eine Rückstellkraft auf die Kontur aus, die wiederum ein Rückstellmoment auf den Sperrhebel bewirkt. Dadurch ist der Sperrhebel in ausgelenkter Stellung in Richtung seiner Sperrstellung vorgespannt. Wird der Sperrhebel vom Bediener losgelassen, drückt die Federeinheit den Sperrhebel über die Kontur zurück in die Sperrstellung.

Vorzugsweise sind zwei Freigabestellungen vorgesehen. Vorteilhaft ist der Sperrhebel ausgehend von seiner Sperrstellung in einer ersten Schwenkrichtung um die Drehachse des Sperrhebels in die erste Freigabestellung und in einer der ersten Schwenkrichtung entgegengerichteten zweiten Schwenkrichtung in die zweite Freigabestellung schwenkbar. Dadurch ist eine Betätigung in beide Richtungen möglich. Dies ist insbesondere vorteilhaft, um eine ergonomische Bedienung für Rechtshänder und Linkshänder zu ermöglichen. Vorzugsweise bewirkt die Federeinheit bei einer Winkelauslenkung des Sperrhebels ausgehend von der Sperrstellung eine Rückstellkraft, die in erster Schwenkrichtung und in zweiter Schwenkrichtung bei gleicher Winkelauslenkung betragsmäßig gleich groß ist. Arbeitsgeräte werden mit verschiedenen Arbeitstechniken und in unterschiedlichen Lagen eingesetzt. Dies spiegelt sich beispielsweise in verschiedenen Griffhaltungen des Bedieners wider. Durch die Möglichkeit, den Sperrhebel in beiden Schwenkrichtungen zu entsperren, ist für den Bediener in unterschiedlichen Lagen und verschiedenen Griffhaltungen des Arbeitsgerätes die Entsperrung vereinfacht.

Vorzugsweise ist die Federeinheit in der Sperrstellung des Sperrhebels derart vorgespannt, dass der Vorspannkraftvektor in der Längsebene liegt. Der Vorspannkraftvektor entspricht dem Vektor der Federkraft. Bevorzugt ist die Federeinheit in der Sperrstellung des Sperrhebels in Richtung zur Drehachse des Sperrhebels vorgespannt. Um den Sperrhebel zu betätigen, muss der Bediener eine gewisse Mindestbetätigungskraft aufbringen, wodurch ein versehentliches Betätigen des Sperrhebels vermieden werden kann.

Es ist vorteilhaft vorgesehen, dass beim Schwenken des Sperrhebels die Federeinheit auf der Kontur des Sperrhebels gleitet. Somit ist die Federeinheit in ständigem Kontakt mit der Kontur des Sperrhebels und übt über die Kontur permanent eine Rückstellkraft auf den Sperrhebel aus.

Die Federeinheit ist vorzugsweise einteilig ausgebildet, wodurch die Erzeugung einer betragsmäßig gleich großen Rückstellkraft bei einer betragsmäßig gleich großen Auslenkung in beide Schwenkrichtungen begünstigt wird. Die Federeinheit ist vorteilhaft als Blattfeder ausgebildet. Es ist vorteilhaft vorgesehen, dass die Kontur des Sperrhebels aus zwei in einem Winkel zueinander angeordneten Schenkeln gebildet ist. Der Winkel zwischen den zueinander angeordneten Schenkeln ergibt sich aus den an den Schenkeln im unteren Abschnitt der Kontur anliegenden Tangenten. Der Winkel öffnet vorteilhaft in Richtung weg von der Drehachse des Sperrhebels. Es kann in einer alternativen Ausführung auch zweckmäßig sein, die Kontur derart zu gestalten, dass der Winkel zwischen den Schenkeln von der Drehachse weg öffnet. Der Winkel liegt vorzugsweise in einem Bereich zwischen 70° und 130°, vorteilhaft zwischen 90° und 110° liegt. Der Winkel beträgt bevorzugt in etwa 100°. Die Schenkel sind vorzugsweise zueinander symmetrisch ausgebildet. Aus dieser Symmetrie ergibt sich, dass die Rückstellkräfte für die beiden Schwenkrichtungen des Sperrhebels betragsmäßig gleich sind.

Die symmetrische Kontur des Sperrhebels ermöglicht eine gesicherte Position des Sperrhebels in der Sperrstellung, da die Vorspannkraft des Federelementes durch die symmetrische Kontur in sich ausgleichende Kraftvektoren aufgeteilt wird. Die entstehenden Drehmomente gleichen sich aus. So ist die Funktion des Sperrhebels als Sperrelement für den Schalthebel immer sichergestellt, auch unabhängig von der Höhe der Vorspannkraft des Federelementes.

Es ist vorteilhaft vorgesehen, dass der Sperrhebel mindestens zwei Flügelelemente zur Betätigung des Sperrhebels aufweist, die bezüglich der Längsebene einander gegenüberliegend angeordnet sind. Die Flügelelemente können in einer Richtung parallel zur Drehachse des Sperrhebels und/oder in einer Richtung, die parallel zur Längsebene und senkrecht zur Drehachse verläuft, versetzt zueinander angeordnet sein. In der bevorzugten Ausführung sind die Flügelelemente in der Sperrstellung des Sperrhebels bezüglich der Längsebene symmetrisch zueinander angeordnet. Dadurch kann das Arbeitsgerät auf einfache Weise alternativ mit der linken oder der rechten Hand gegriffen und entsperrt werden. Der Bediener kann folglich zum Halten des Arbeitsgerätes situativ zwischen der linken und der rechten Hand wechseln. Zudem ergeben sich bei der Bedienung des Arbeitsgerätes keine Unterschiede für Links- und Rechtshänder. Der Betätigungshebel sowie der Sperrhebel können von beiden Händen gleichermaßen ergonomisch betätigt werden. Vorzugsweise sind die Flügelelemente in Sperrstellung des Sperrhebels sowohl von der in erster Schwenkrichtung als auch von der in zweiter Schwenkrichtung liegenden Seite aus zugänglich. Demnach kann der Bediener beim Halten des Handgriffes mit seinem Daumen in einer Abwärtsbewegung den Sperrhebel an einem Flügelelement in die erste Schwenkrichtung schwenken und mit einer Aufwärtsbewegung des Daumens den Sperrhebel an dem gleichen Flügelelement in die zweite Schwenkrichtung schwenken. Dies ermöglicht eine einfache Entsperrung des Sperrhebels bei verschiedenen Griffhaltungen.

Es ist insbesondere vorgesehen, dass der Sperrhebel ausgehend von seiner Sperrstellung in einer ersten Schwenkrichtung und in einer der ersten Schwenkrichtung entgegengerichteten zweiten Schwenkrichtung um die Drehachse des Sperrhebels schwenkbar ist, wobei die Federeinheit einen ersten Federschenkel und einen zweiten Federschenkel aufweist. Die Federeinheit ist vorzugsweise derart ausgebildet, dass bei Auslenkung des Sperrhebels in die erste Schwenkrichtung der erste Federschenkel am Sperrhebel anliegend eine Rückstellkraft in Richtung der Sperrstellung auf den Sperrhebel bewirkt. Bei Betätigung des Sperrhebels in die erste Schwenkrichtung wird der erste Federschenkel der Federeinheit ausgelenkt und dabei die Federeinheit gespannt. Der Federschenkel bildet vorzugsweise eine Rückstellkraft aus, die auf den Sperrhebel wirkt. Lässt der Bediener den Sperrhebel los, so dass die Betätigungskraft aufgehoben ist und auf den Sperrhebel die Rückstellkraft der Federeinheit wirkt, dreht sich dieser zurück in die Sperrstellung.

Die Federeinheit ist vorzugsweise derart ausgebildet, dass bei Auslenkung des Sperrhebels in die zweite Schwenkrichtung der zweite Federschenkel am Sperrhebel anliegend eine Rückstellkraft in Richtung der Sperrstellung auf den Sperrhebel bewirkt. Somit kann der Sperrhebel in beide Schwenkrichtungen geschwenkt werden, wodurch eine erhöhte Ergonomie für den Bediener erreicht wird.

Die Federeinheit ist bevorzugt am Sperrhebel eingespannt. So kann vor der Montage des Arbeitsgerätes die Federeinheit in dem Sperrhebel eingespannt werden und der Sperrhebel mit der Federeinheit als Baugruppe auf einfache Weise montiert werden. Vorzugsweise bildet das Gehäuse einen ersten Drehanschlag und einen zweiten Drehanschlag, wobei der erste Drehanschlag vorteilhaft eine Drehbewegung des ersten Federschenkels in die zweite Schwenkrichtung begrenzt und der zweite Drehanschlag vorteilhaft eine Drehbewegung des zweiten Federschenkels in die erste Schwenkrichtung begrenzt. Bewirkt die Federeinheit eine Rückstellkraft auf den Sperrhebel, ist Federeinheit an dem Gehäuse abgestützt.

Es ist bevorzugt vorgesehen, dass der Sperrhebel drei Flügelelemente zur Betätigung des Sperrhebels aufweist. Dadurch kann der Bediener den Sperrhebel auch bei einer seitlichen Griffhaltung des Arbeitsgerätes auf eine ergonomische Weise betätigen. Eine seitliche Griffhaltung ist beispielsweise bei Heckenscheren üblich. Wird eine Hecke beispielsweise entlang ihrer horizontal ausgerichteten Oberseite geschnitten, muss der Bediener mit der Heckenschere eine Bewegung in horizontaler Ebene ausführen. Hierzu hält der Bediener die Heckenschere üblicherweise in einer oberen Griffhaltung. Schneidet der Bediener die Hecke an ihren vertikal verlaufenden Seiten, wird der Bediener mit der Heckenschere eine Auf- und Abbewegung in vertikaler Ebene durchführen und dabei die Heckenschere seitlich verdrehen, so dass auch das Schneidwerkzeug der Heckenschere parallel zu den Seiten der Hecke ausgerichtet ist. Hierzu hält der Bediener die Heckenschere üblicherweise um 90° um die Längsachse des Handgriffes gegenüber der oberen Griffhaltung verdreht. Bei einer solchen Griffhaltung ist es bei herkömmlichen Arbeitsgeräten für den Bediener schwierig, den Sperrhebel zu betätigen.

Durch die an dem Sperrhebel angeordneten drei Flügelelemente kann der Bediener in jeder Griffhaltung den Sperrhebel auf einfache Weise betätigen. Auch bei anderen Arbeitsgeräten, die unterschiedliche Griffhaltungen erfordern, kann eine solche Gestaltung des Sperrhebels vorteilhaft sein.

Vorzugsweise ist ein Flügelelement der drei Flügelelemente ein oberes Flügelelement. Das obere Flügelelement ist bezüglich der Drehachse des Sperrhebels vorteilhaft dem Betätigungshebel gegenüberliegend am Sperrhebel angeordnet. Das obere Flügelelement liegt vorzugsweise in der Längsebene des Handgriffes in der Sperrstellung des Sperrhebels. Bevorzugt sind zwei der drei Flügelelemente seitliche Flügelelemente, wobei die zwei seitlichen Flügelelemente des Sperrhebels bezogen auf die Längsebene des Handgriffes einander gegenüberliegend am Sperrhebel angeordnet sind. Die seitlichen Flügelelemente können in der Sperrstellung des Sperrhebels in einer Richtung parallel zur Drehachse des Sperrhebels und/oder in einer Richtung, die parallel zur Längsebene und senkrecht zur Drehachse verläuft, versetzt zueinander angeordnet sein. In der bevorzugten Ausführung sind die seitlichen Flügelelemente in der Sperrstellung des Sperrhebels bezüglich der Längsebene symmetrisch zueinander angeordnet. Die zwei seitlichen Flügelelemente des Sperrhebels weisen einen gleichen Winkelabstand um die Drehachse des Sperrhebels zum oberen Flügelelement auf. Demnach sind die seitlichen Flügelelemente vorzugsweise symmetrisch zum oberen Flügelelement angeordnet. Der Winkelabstand beträgt mindestens 60°, vorzugsweise mindestens 90°. Durch die seitlich angeordneten Flügelelemente kann das Arbeitsgerät sowohl mit der rechten als auch mit der linken Hand gegriffen und der Sperrhebel betätigt werden. Durch das obere Flügelelement ist insbesondere bei seitlicher Griffhaltung des Arbeitsgerätes eine ergonomische Betätigung des Sperrhebels gewährleistet.

Weitere Merkmale der Erfindung ergeben sich aus der Beschreibung und der Zeichnung, in der nachstehend im Einzelnen beschriebene Ausführungsbeispiele der Erfindung wiedergegeben sind. Es zeigen:
- Fig. 1: eine Seitenansicht eines erfindungsgemäßen Arbeitsgerätes,
- Fig. 2: eine Seitenansicht des Arbeitsgerätes nach Fig. 1 mit offenem Gehäuse,
- Fig. 3: eine ausschnittsweise Darstellung des Arbeitsgerätes nach Fig. 1 mit offenem Gehäuse,
- Fig. 4: eine ausschnittsweise Schnittdarstellung des Arbeitsgerätes in Richtung des Pfeils 4 nach Fig. 1,
- Fig. 5: eine perspektivische Darstellung des Sperrhebels mit Federeinheit des Arbeitsgerätes nach Fig. 1 in Sperrstellung,
- Fig. 6: eine ausschnittsweise seitliche Schnittdarstellung des Sperrhebels und des Betätigungshebels des Arbeitsgerätes nach Fig. 1,
- Fig. 7: eine ausschnittsweise Schnittdarstellung des Arbeitsgerätes entlang der Linie IV-IV in Fig. 1 in erster Freigabestellung,
- Fig. 8: eine perspektivische Darstellung des Sperrhebels mit Federeinheit in erster Freigabestellung,
- Fig. 9: eine ausschnittsweise Schnittdarstellung des Arbeitsgerätes entlang der Linie IV-IV in Fig. 1 in Freigabestellung und mit betätigtem Betätigungshebel,
- Fig. 10: eine perspektivische Darstellung des Sperrhebels mit Federeinheit in Freigabestellung mit betätigtem Betätigungshebel,
- Fig. 11: eine perspektivische Darstellung einer alternativen Ausführung eines erfindungsgemäßen Arbeitsgerätes,
- Fig. 12: eine ausschnittsweise perspektivische Darstellung eines Arbeitsgerätes mit einem Sperrhebel mit drei Flügelelementen und einer erfindungsgemäßen Federeinheit,
- Fig. 13: eine perspektivische Darstellung des Sperrhebels mit Federeinheit nach Fig. 12,
- Fig. 14: eine ausschnittsweise Schnittdarstellung des erfindungsgemäßen Arbeitsgerätes in Blickrichtung der Drehachse des Sperrhebels in Richtung vom Sperrhebel zum Betätigungshebel,
- Fig. 15: eine ausschnittsweise Schnittdarstellung gemäß Fig. 14 in erster Freigabestellung,
- Fig. 16: eine ausschnittsweise Schnittdarstellung gemäß Fig. 14 in zweiter Freigabestellung,
- Fig. 17: eine perspektivische Darstellung einer alternativen Ausführung eines erfindungsgemäßen Arbeitsgerätes mit Schaft,
- Fig. 18: eine ausschnittsweise Schnittdarstellung des Sperrhebels des Arbeitsgeräts aus Fig. 17 am Griff in Sperrstellung in Blickrichtung senkrecht auf die Längsebene,
- Fig. 19: eine ausschnittsweise Schnittdarstellung des Sperrhebels am Griff gemäß Fig. 18 in Freigabestellung.
- Fig. 20: eine perspektivische Darstellung des Sperrhebels mit Federeinheit eines Arbeitsgerätes mit Schaft gemäß Fig. 18,
- Fig. 21: eine ausschnittsweise Schnittdarstellung des Arbeitsgerätes nach Fig. 18 am Sperrhebel in Blickrichtung parallel zur Drehachse vom Sperrhebel in Richtung Betätigungshebel,
- Fig. 22: eine ausschnittsweise Schnittdarstellung des Arbeitsgerätes gemäß Fig. 21 in Sperrstellung.

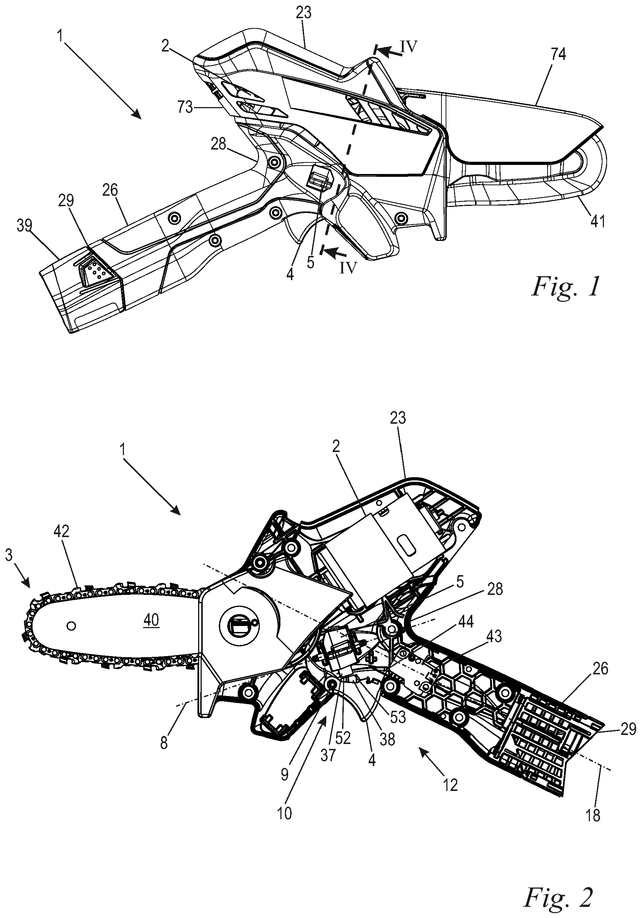

In Fig. 1 ist ein erfindungsgemäßes handgeführtes Arbeitsgerät gezeigt, das im Ausführungsbeispiel als Gehölzschneider ausgebildet ist. Das Arbeitsgerät 1 kann in alternativer Ausführung beispielsweise auch als Heckenschere, Motorsäge, Blasgerät oder dgl. ausgebildet sein. Das Arbeitsgerät 1 kann zudem auch als Arbeitsgerät mit Schaft, beispielsweise als Hochentaster, Heckenschneider, Freischneider, Rasentrimmer, Motorsense oder dgl. ausgebildet sein. Das Arbeitsgerät 1 umfasst ein Gehäuse 23 mit einem Handgriff 26. Der Handgriff 26 erstreckt sich entlang seiner Längsachse 18 von seinem hinteren Ende 29 nach vorne in Richtung zu seinem vorderen Ende 28. Am vorderen Ende 28 ist der Handgriff 26 mit dem Grundkörper 73 des Gehäuses 23 verbunden. Das Arbeitsgerät 1 umfasst ein Werkzeug 3, das im Ausführungsbeispiel eine Führungsschiene 40 mit einer Sägekette 42 (Fig. 2) ist. Die Führungsschiene 40 ragt an der dem Handgriff 26 gegenüberliegenden Seite des Gehäuses 23 nach vorne. In der Darstellung ist auf die Führungsschiene 40 ein Schnittschutz 41 aufgesteckt. An dem Gehäuse 23 ist eine schwenkbare Haube 74 angeordnet, die sich entlang der Führungsschiene 41 erstreckt und die Führungsschiene 40 zumindest teilweise überragt. Die Haube 74 kann in Richtung nach oben von der Führungsschiene 40 weggeschwenkt werden. An der Führungsschiene 40 ist die Sägekette 42 umlaufend angeordnet, die von einem im Gehäuse 26 angeordneten Antriebsmotor 2 angetrieben ist. Der Antriebsmotor 2 ist im Ausführungsbeispiel als Elektromotor ausgebildet, der von einem Akku 39 mit Energie gespeist wird. Der Akku 39 ist an dem hinteren Ende 29 des Handgriffes 26 angeordnet. Der Elektromotor kann auch über ein Anschlusskabel mit Energie versorgt sein. Der Antriebsmotor 2 kann in einer alternativen Ausführung auch als Verbrennungsmotor, insbesondere als Zweitaktmotor oder ein gemischgeschmierter Viertaktmotor ausgebildet sein.

Wie in Fig. 1 gezeigt, umfasst das Arbeitsgerät 1 einen Betätigungshebel 4 zur Bedienung des Antriebsmotors 2 und einen Sperrhebel 5 für den Betätigungshebel 4.

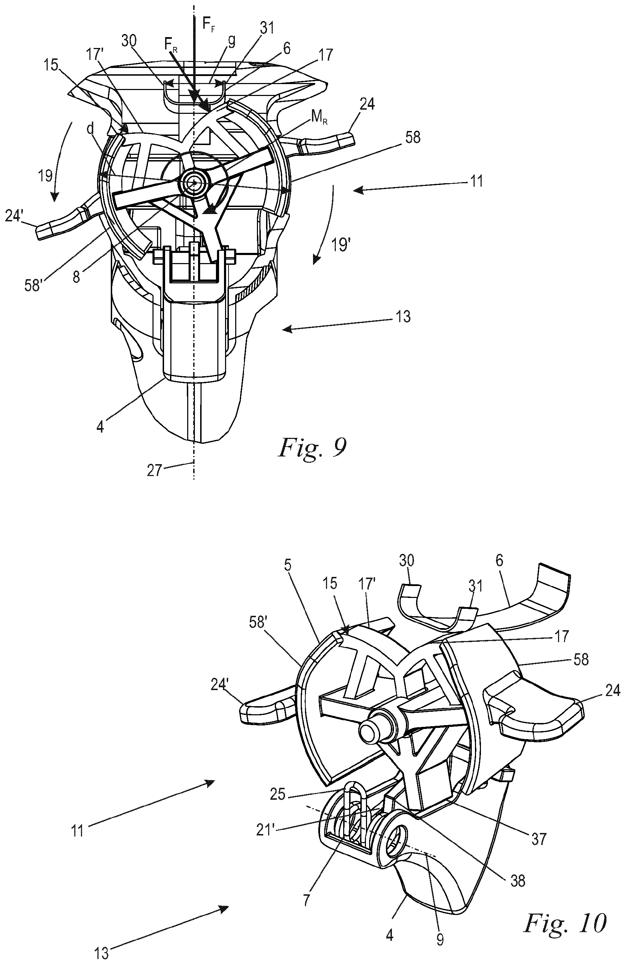

Der Betätigungshebel 4 und der Sperrhebel 5 sind am Gehäuse 26 am vorderen Ende 28 des Handgriffes 26 angeordnet. In einer Sperrstellung 10 des Sperrhebels 5 ist der Betätigungshebel 4 durch den Sperrhebel 5 blockiert. Der durch den Sperrhebel 5 blockierte Betätigungshebel 4 befindet sich in einer unbetätigten Stellung. In einer Freigabestellung 11, 11' des Sperrhebels 5 ist der Betätigungshebel 4 freigegeben. In der Freigabestellung 11, 11' des Sperrhebels 5 kann der Bediener den Betätigungshebel 4 in eine Arbeitsstellung 13 (Figuren 9, 10) drücken und somit den Antriebsmotor 2 bedienen.

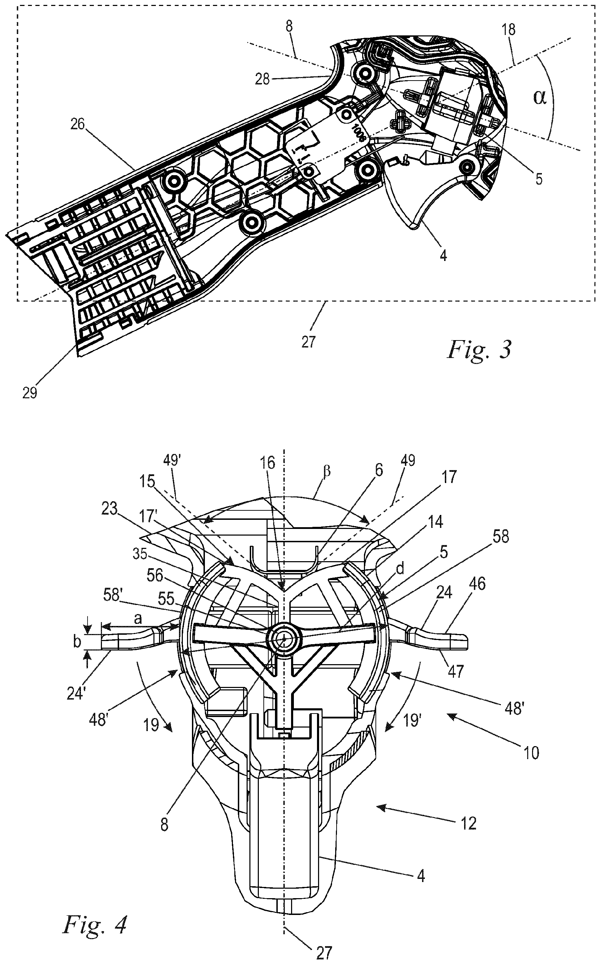

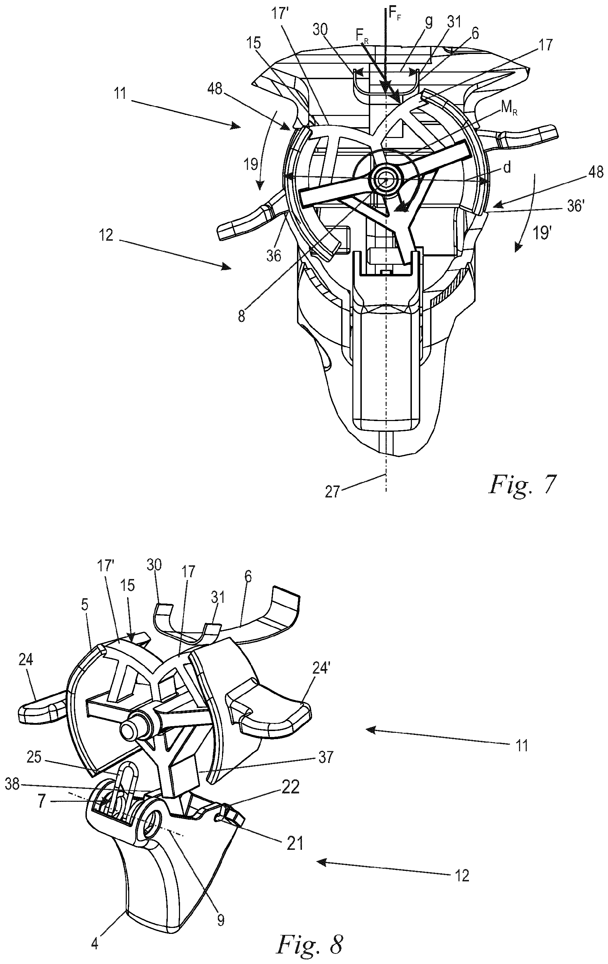

Wie in Fig. 2 gezeigt, ist der Sperrhebel 5 am Gehäuse 23 um seine Drehachse 8 des Sperrhebels 5 schwenkbar gelagert. Der Betätigungshebel 4 ist am Gehäuse 23 um eine Schwenkachse 9 schwenkbar gelagert. Die Schwenkachse 9 ist senkrecht zu einer Längsebene 27 (Fig. 3) des Handgriffes 26 ausgerichtet, wobei die Längsebene 27 die Längsachse 18 des Handgriffes 26 enthält und parallel zur Drehachse 8 des Sperrhebels 5 verläuft. Der Begriff "parallel" beinhaltet auch, dass sowohl die Drehachse 8 Sperrhebels 5 als auch die Längsachse 18 in der Längsebene 27 enthalten sein können. Der Sperrhebel 5 umfasst eine Fahne 37 mit einer Stirnfläche 52, wobei die Fahne 37 auf der dem Betätigungshebel 4 zugewandten Seite des Sperrhebels 5 angeordnet ist. Der Betätigungshebel 4 umfasst eine Gegenfahne 38 mit einer Gegenstirnfläche 53, die auf der dem Sperrhebel 5 zugewandten Seite des Betätigungshebels 4 angeordnet ist. Die Stirnfläche 52 der Fahne 37 und die Gegenstirnfläche 53 der Gegenfahne 38 sind in Sperrstellung 10 einander zugewandt ausgerichtet. Wird der Betätigungshebel 4 gedrückt, kontaktieren sich die Stirnfläche 52 und die Gegenstirnfläche 53, wodurch ein Schwenken des Betätigungshebels 4 um die Schwenkachse 9 gesperrt ist. Wird der Sperrhebel 5 in eine Freigabestellung 11, 11' (Figuren 7, 8) geschwenkt, gibt der Sperrhebel 5 den Betätigungshebel 4 frei. Dabei wird die Fahne 37 des Sperrhebels 5 aus dem Schwenkweg der Gegenfahne 38 des Betätigungshebels 4 bewegt. Der Betätigungshebel 4 kann mit seiner Gegenfahne 38 um die Schwenkachse 9 geschwenkt werden, ohne dabei die Fahne 37 des Sperrhebels 5 zu kontaktieren.

Wie in Fig. 2 gezeigt, umfasst das Arbeitsgerät 1 einen Schalter 43 mit einer Kontaktzunge 44 zum Betätigen des Antriebsmotors 2. Beim Schwenken des Betätigungshebels 4 drückt der Betätigungshebel 4 die Kontaktzunge 44 ein, wodurch der Antriebsmotor 2 eingeschaltet wird. In einer alternativen Ausführung kann es auch zweckmäßig sein, einen Schalter 43 ohne Kontaktzunge 44 vorzusehen. Ein derartiger Schalter 43 würde direkt durch den Betätigungshebel 4 betätigt werden. Über den Betätigungshebel 4 kann der Antriebsmotor 2 lediglich ein- oder ausgeschaltet werden. In einem alternativen Ausführungsbeispiel des Arbeitsgerätes 1 ist die Drehzahl des als Elektromotor ausgebildeten Antriebsmotors 2 über den Betätigungshebel 4 stufenlos einstellbar.

Wie in Fig. 3 gezeigt, schließt die Längsachse 18 des Handgriffes 26 mit der Drehachse 8 des Sperrhebels 5 in Blickrichtung senkrecht auf die Längsebene 27 einen Winkel α ein. Der Winkel α liegt in einem Bereich von 10° bis 60°, insbesondere von 15° bis 45°. Im Ausführungsbeispiel beträgt der Winkel α insbesondere etwa 45°. Hält der Bediener das Arbeitsgerät 1 an dem Handgriff 26 fest, kann der Bediener mit seinem Daumen den Sperrhebel 5 betätigen. Dabei muss der Bediener mit seinem Daumen lediglich eine Schwenkbewegung ausführen. Durch die geneigte Anordnung der Längsachse 18 und der Drehachse 8 des Sperrhebels 5, in anderen Worten durch die verdrehte Einbaulauge des Sperrhebels 5 gegenüber dem Handgriff 26, liegen die Schwenkbewegungen 19, 19' des Sperrhebels 5 im Schwenkbereich des Daumens. Dadurch ergibt sich eine besonders ergonomische Bedienung des Arbeitsgerätes.

In einer alternativen nicht gezeigten Ausführung des Arbeitsgerätes kann es zweckmäßig sein, den Handgriff gekrümmt auszubilden. In solchen Ausführungsbeispielen definiert sich die Längsachse 18 über eine an einer Mittellinie des Handgriffes 26 am vorderen Ende anliegende Tangente. Die Mittellinie verläuft durch die Flächenschwerpunkte der einzelnen parallel zueinander liegenden Querschnittsebenen des Handgriffes 26.

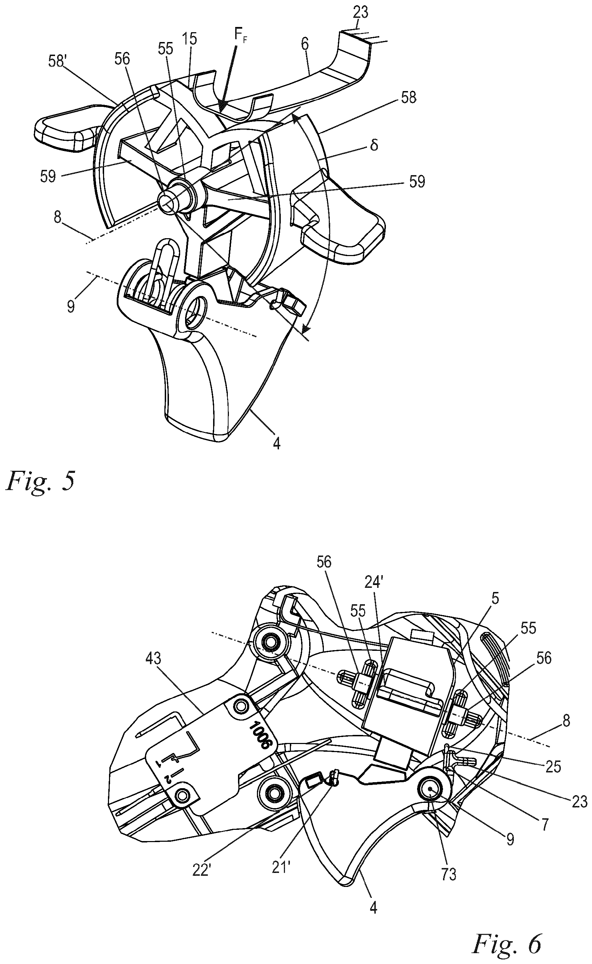

Wie in Fig. 4 gezeigt, umfasst der Sperrhebel 5 eine Nabe 55, wobei der Sperrhebel 5 mit zwei Lagerzapfen 56 (Fig. 6) um die Drehachse 8 des Sperrhebels 5 schwenkbar gelagert ist. Die Lagerzapfen 56 sind vorteilhaft am Sperrhebel 5 angeformt. Die Lagerzapfen 56 können jedoch auch durch eine separate Welle gebildet und gegenüber dem Gehäuse 23 um die Drehachse 8 des Sperrhebels 5 drehbar gelagert sein. Wie in den Figuren 4 und 5 gezeigt, umfasst der Sperrhebel 5 im Ausführungsbeispiel zwei Wandabschnitte 58, 58', die kreissegmentförmig verlaufen. Die Wandabschnitte 58, 58' sind über einen Mittelsteg 59 mit der Nabe 55 verbunden. Die beiden Wandabschnitte 58, 58' sind in Sperrstellung 10 bezüglich der Längsebene 27 einander gegenüberliegend angeordnet. Die Wandabschnitte 58, 58' sind symmetrisch zueinander angeordnet und ausgebildet. Die Wandabschnitte 58, 58' erstrecken sich jeweils über einen Winkel δ (Fig. 5) um die Drehachse 8, wobei der Winkel δ mindestens 60°, insbesondere mindestens 75°, vorzugsweise in etwa 90° beträgt. Die Wandabschnitte 58, 58' bilden eine Umfangswand 14 des Sperrhebels 5 mit einem Durchmesser d.

Wie in Fig. 4 gezeigt, umfasst der Sperrhebel 5 zwei seitliche Flügelelemente 24, 24' zur Betätigung des Sperrhebels 5. Die zwei seitlichen Flügelelemente 24, 24' sind an den Wandabschnitten 58, 58' angeordnet. Die zwei seitlichen Flügelelemente 24, 24' sind insbesondere einteilig mit den Wandabschnitten 58, 58' ausgebildet. Die seitlichen Flügelelemente 24, 24' erstrecken sich in etwa senkrecht zur Längsebene 27 weg von der Umfangswand 14 des Sperrhebels 5. Dabei ragen die seitlichen Flügelelemente 24, 24' aus im Gehäuse 23 vorgesehenen Öffnungen 48, 48', wodurch der Sperrhebel 5 für den Bediener außerhalb des Gehäuses 23 zugänglich ist. Die Öffnungen 48, 48' sind derart gegenüber dem Sperrhebel 5 angeordnet, dass die Wandabschnitte 58, 58' den vom Gehäuse 23 umschlossenen Innenraum an den Öffnungen 48, 48' abdecken. Die Flügelelemente 24, 24' sind bezüglich der Längsebene 27 des Handgriffes 26 gegenüberliegend an dem Sperrhebel 5 angeordnet. Die Flügelelemente 24, 24' sind bezüglich der Längsebene 27 zueinander symmetrisch ausgebildet.

Wie in Fig. 4 gezeigt, weisen die Flügelelemente 24, 24' jeweils eine senkrecht zur Längsebene 27 gemessene Breite a auf. Die Breite a entspricht im Ausführungsbeispiel mindestens 15%, insbesondere mindestens 30%, vorzugsweise 38% des Durchmessers d des Sperrhebels 5. Die Breite a der Flügelelemente 24, 24' entspricht höchstens 50% des Durchmessers d des Sperrhebels 5. Die Flügelelemente 24, 24' weisen eine dem Betätigungselement 4 abgewandte Flügeloberseite 46 und eine dem Betätigungselement 4 zugewandte Flügelunterseite 47 auf. Zudem besitzen die seitlichen Flügelelemente 24, 24' eine Höhe b, die dem in Richtung senkrecht zur Drehachse 8 und parallel zur Längsebene 27 gemessenen Abstand zwischen der Flügelunterseite 47 und der Flügeloberseite 46 entspricht. Die Höhe b entspricht höchstens 20% des Durchmessers d des Sperrhebels 5. Die seitlichen Flügelelemente 24, 24' liegen mit der Drehachse 8 in einer Ebene, wobei die Ebene senkrecht zur Längsebene 27 ausgerichtet ist.

Wie in Fig. 4 gezeigt, umfasst das Arbeitsgerät 1 eine Federeinheit 6. Die Federeinheit 6 spannt den Sperrhebel 5 in Richtung der Sperrstellung 10 vor. Der Sperrhebel 5 weist eine Kontur 15 auf, die mit der Federeinheit 6 zusammenwirkt. Die Kontur 15 ist aus zwei Schenkeln 17, 17' gebildet, die in einem unteren Abschnitt 16 miteinander verbunden sind. Der untere Abschnitt 16 ist dabei der der Drehachse 8 am nächsten liegende Abschnitt der Kontur 15 und bildet eine zur Drehachse 8 hin verlaufende Vertiefung der Kontur 15. Die einzelnen Schenkel 17, 17' sind bogenförmig ausgebildet. Die Schenkel 17, 17' verlaufen bezüglich der Drehachse 8 des Sperrhebels 5 von radial außen nach innen. Im Ausführungsbeispiel ist der Sperrhebel 5 derart ausgebildet, dass die Schenkel 17, 17' in der Sperrstellung 10 von den dem Betätigungshebel 4 abgewandten oberen Enden der Wandabschnitte 58, 58' bogenförmig zur Längsebene 27 hin verlaufen und über einen Verbindungssteg 35 an der Nabe 55 abgestützt sind. Die von den Schenkeln 17, 17' gebildete Kontur 15 entspricht in etwa der Form eines V. Die Kontur 15 ist derart ausgerichtet, dass der untere Abschnitt 16 der Kontur 15 zur Drehachse 8 des Sperrhebels 5 hin angeordnet ist und sich die Kontur 15 in ihrer V-Form weg von der Drehachse 8 des Sperrhebels 5 hin öffnet. In der Sperrstellung verläuft die Längsebene 27 mittig durch den unteren Abschnitt 16. Die an dem unteren Abschnitt 16 an den Schenkeln 17 anliegenden Tangenten 49, 49' schließen einen Winkel β ein, der im Ausführungsbeispiel in einem Bereich zwischen 70° und 130°, vorzugsweise zwischen 90° und 110° liegt. Der Winkel β entspricht in etwa 100°.

Wie in den Figuren 4 und 5 gezeigt, liegt die Federeinheit 6 an der Kontur 15 des Sperrhebels 5 an. Die Federeinheit 6 wirkt mit einer Federkraft F_{F} (Fig. 5) auf die Kontur 15 in Richtung der Drehachse 8 des Sperrhebels 5. Der Vorspannkraftvektor, der dem Vektor der Federkraft F_{F} entspricht, liegt in der Längsebene 27. In einer alternativen Ausführung kann die Kontur 15 auch derart gestaltet sein, dass die Kontur 15 in ihrer V-Form nach unten zur Drehachse 8 hin öffnet. In einer solchen Ausführung wäre die Federeinheit 6 zwischen der Drehachse 8 und der Kontur 15 angeordnet und würde von der Drehachse 8 weg auf die Kontur 15 wirken. Die Federeinheit 6 ist im Ausführungsbeispiel als Blattfeder ausgebildet. In einer alternativen Ausführung kann die Federeinheit 6 auch als Schenkelfeder oder dgl. ausgebildet sein. Die Federeinheit 6 ist bezogen auf die Längsebene 27 symmetrisch ausgebildet.

Wie in Fig. 4 gezeigt, umfasst der Sperrhebel 5 eine erste Schwenkrichtung 19 und eine der ersten Schwenkrichtung 19 entgegengesetzte zweite Schwenkrichtung 19'. Wird der Sperrhebel 5, wie in den Figuren 7 bis 10 gezeigt, in eine der beiden Schwenkrichtungen 19, 19' um die Drehachse 8 des Sperrhebels 5 geschwenkt, wird die Federeinheit 6 durch die Kontur 15 des Sperrhebels 5 in Richtung weg von der Drehachse 8 des Sperrhebels 5 gedrückt. Dabei gleitet die Federeinheit 6 an einem der beiden Schenkel 17, 17' der Kontur 15 entlang, wobei sich die auf die Kontur 15 des Sperrhebels 5 wirkende Federkraft F_{F} erhöht. Im Kontaktpunkt zwischen der Federeinheit 6 und der Kontur 15 wirkt eine aus der Federkraft F_{F} resultierende Rückstellkraft F_{R} in etwa flächennormal auf die Kontur 15. Die Rückstellkraft F_{R} bewirkt ein Rückstellmoment M_{R}, das der Schwenkrichtung, im Ausführungsbeispiel der ersten Schwenkrichtung 19, entgegenwirkt. Wird der Sperrhebel 5 vom Bediener losgelassen, wirkt auf den Sperrhebel 5 keine Betätigungskraft. Lediglich die Federkraft F_{F} wirkt durch die Federeinheit 6 auf den Sperrhebel 5. Die aus der Federkraft F_{F} resultierende Rückstellkraft F_{R} bewirkt das Rückstellmoment M_{F}, wodurch der Sperrhebel 5 zurück in die Sperrstellung 10 gedreht wird.

Wie in den Fig. 7 und 9 gezeigt, erzeugen die Federeinheit 6 und die Kontur 15 über den gesamten Schwenkweg des Sperrhebels ein in etwa konstantes Rückstellmoment M_{R}. Bei zunehmender Auslenkung der Federeinheit 6 durch Schwenken des Sperrhebels 5 erhöht sich die daraus resultierende Federkraft F_{R}. Die Kontur 15 hingegen flacht mit zunehmendem radialen Abstand zur Drehachse 8 des Sperrhebels 5 derart ab, dass die Richtung der Rückstellkraft F_{R} näher zur Drehachse 8 des Sperrhebels 5 gerichtet ist. Folglich nimmt auch der Hebelarm der Rückstellkraft F_{R} zur Drehachse 8 des Sperrhebels 5 ab, wodurch das Rückstellmoment M_{R} in etwa konstant bleibt. Die Kontur 15 ist vorzugsweise derart ausgebildet, dass beim Schwenken des Sperrhebels 5 über den gesamten Schwenkbereich ein in etwa betragsmäßig konstantes Rückstellmoment M_{R} wirkt. Die Kontur 15 kann jedoch in alternativer Ausführung entsprechend des gewünschten Rückstellmomentes M_{R} ausgebildet sein. Durch die symmetrische Ausgestaltung der Schenkel 17, 17' der Kontur 15 ist bei gleicher Auslenkung in die jeweilige Schwenkrichtung 19, 19' auch die Rückstellkraft F_{R} betragsmäßig gleich groß. Dadurch ergibt sich für den Bediener in allen Schwenkrichtungen 19, 19' des Sperrhebels 5 ein besonders angenehmes Schwenkverhalten. Das Schwenkverhalten des Sperrhebels 5 ist gleich, unabhängig davon, welches der beiden seitlichen Flügelelemente 24, 24' betätigt und in welche Schwenkrichtung 19, 19' eines der beiden seitlichen Flügelelemente 24, 24' gedrückt wird.

Wie in den Figuren 7 und 9 gezeigt, umfasst die Federeinheit 6 im Ausführungsbeispiel zwei einander gegenüberliegende Federschenkel 30 und 31, die an dem an der Kontur 15 anliegenden Ende der Federeinheit 6 ausgebildet sind. Die Federschenkel 30, 31 verlaufen in Richtung weg von der Kontur 15. Die Federschenkel 30, 31 sind im bevorzugten Ausführungsbeispiel als abgebogene Abschnitte der Federeinheit 6 ausgebildet, wodurch die Federeinheit 6 eine gerundete Kontaktfläche gegenüber der Kontur 15 aufweist. Dies begünstigt das Auf- und Abgleiten der Federeinheit 6 an der Kontur 15.

Wie in den Figuren 7 und 9 gezeigt, weist die Federeinheit 6 eine senkrecht zur Längsebene 27 gemessene Breite g auf, die mindestens 20% des Durchmessers d des Sperrhebels 5 entspricht. Durch die breite Ausgestaltung der Federeinheit 6 liegt die Federeinheit 6 in der Sperrstellung 10 des Sperrhebels 5 in zwei Kontaktpunkten auf der Kontur 15 an, nämlich jeweils auf einem der beiden Schenkel 17, 17' der Kontur 15 (Fig. 4). Die Federeinheit 6, die in Richtung der Drehachse 8 des Sperrhebels 5 vorgespannt ist, übt somit auf beide Schenkel 17, 17' der Kontur 15 jeweils eine Rückstellkraft F_{R} aus. Diese Rückstellkräfte F_{R} bedingen wiederum gegensätzliche Rückstellmomente M_{R}. Da die Rückstellmomente M_{R} betragsmäßig gleich groß sind, heben sich diese gegenseitig auf, wodurch sich die Federeinheit 6 mit dem Sperrhebel 5 in der Sperrstellung 10 in einem statischen Gleichgewicht befindet. Durch die gegeneinander wirkenden Rückstellmomente M_{R} liegt eine Vorspannung des Sperrhebels 5 in seine Sperrstellung 10 vor. Wie in den Figuren 7 und 9 gezeigt, wirkt die Federeinheit 6 mit der Federkraft F_{F} auf den Sperrhebel 5 in Richtung der Drehachse 8 des Sperrhebels 5. Durch die breite Ausgestaltung der Federeinheit 6 erfolgt jedoch die Krafteinleitung an der Kontur 15 nicht in Richtung der Drehachse 8 des Sperrhebels 5, sondern versetzt zu dieser. Dadurch können bereits bei geringen Auslenkungen des Sperrhebels 5 große Rückstellmomente M_{R} erzeugt werden.

Wie in Fig. 7 gezeigt, dient als Drehanschlag des Sperrhebels 5 jeweils eine Unterkante 36, 36' der Öffnungen 48, 48' des Gehäuses 23. Die Unterkante 36, 36' ist die dem Betätigungshebel 4 am nächsten liegende Kante der Öffnungen 48, 48' des Gehäuses 23. Ist also der Sperrhebel 5 in der Freigabestellung 11, 11' angeordnet, bildet die Unterkante 36, 36' der Öffnung 48, 48' einen Anschlag für das Flügelelement 24, 24'. Demnach ist der Sperrhebel 5 in die erste Schwenkrichtung 19 drehbar, bis das seitliche Flügelelement 24 mit seiner Flügeloberseite 46 gegen die Unterkante 36 der Öffnung 48 anschlägt. Es kann in einer alternativen Ausführung auch zweckmäßig sein, als Anschlag für die Flügelelemente 24, 24' die Oberkanten der Öffnungen 48, 48' vorzusehen.

In den Figuren 9 und 10 ist der Sperrhebel 5 in Freigabestellung 11 geschwenkt dargestellt, und der Betätigungshebel 4 ist betätigt und befindet sich in der Arbeitsstellung 13. Die Fahne 37 des Sperrhebels 5 und die Gegenfahne 38 des Betätigungshebels 4 kontaktieren sich nicht.

Wie in den Figuren 6, 8 und 10 gezeigt, umfasst das Arbeitsgerät 1 ein Federelement 7, welches den Betätigungshebel 4 in Richtung der unbetätigten Stellung 12 vorspannt. Das Federelement 7 ist im Ausführungsbeispiel als Schenkelfeder ausgebildet. Das Federelement 7 ist bezüglich der Längsebene 27 symmetrisch ausgebildet, um unerwünschte Kippmomente auf den Betätigungshebel 4 zu vermeiden. Das Federelement 7 umfasst zwei Federschenkel 21, 21', die an einem Bauteil von Gehäuse 23 und Betätigungshebel 4 eingespannt sind, wobei das Federelement 7 über einen mittleren Federabschnitt 25 an dem anderen Bauteil von Gehäuse 23 und Betätigungshebel 4 abgestützt ist. Im bevorzugten Ausführungsbeispiel ist der mittlere Federabschnitt 25 des Federelementes 7 am Gehäuse 23 (Fig. 6) eingespannt. Die Federschenkel 21, 21' des Federelementes 7 sind an ihren Enden 22, 22' am Betätigungshebel 4 eingespannt. Vorzugsweise sind die Federschenkel 21, 21' zusätzlich zwischen ihren Enden und der Schwenkachse 9 am Betätigungshebel 4 abgestützt. Die Windungen des Federelementes 7 sind auf einem Lagerzapfen 73 des Betätigungshebels 4 abgestützt, an dem der Betätigungshebel 4 schwenkbar gelagert ist. Wirkt keine Betätigungskraft auf den Betätigungshebel 4, so ist dieser durch das Federelement 7 in die unbetätigte Stellung gespannt. Um den Betätigungshebel 4 in die Arbeitsstellung 13 zu drücken, muss die Federkraft des Federelementes 7 überwunden werden.

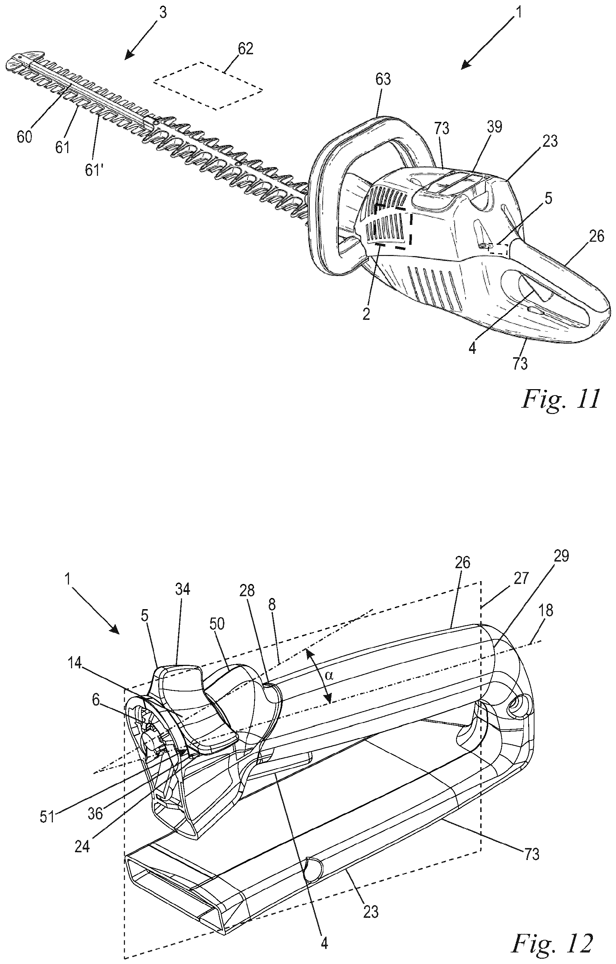

In Fig. 11 ist ein alternatives Ausführungsbeispiel eines erfindungsgemäßen Arbeitsgerätes 1 gezeigt, nämlich eine Heckenschere. Gleiche Bezugszeichen wie im Ausführungsbeispiel nach den Figuren 1 bis 10 bezeichnen einander entsprechende Bauteile. Das Arbeitsgerät 1 weist als Werkzeug 3 einen Messerbalken 60 mit zwei sich hin- und herbewegbaren Schneidmessern 61, 61' auf, die eine Schnittebene 62 bestimmen. An einem Ende des Messerbalkens 60 ist in dem Gehäuse 23 eine Antriebseinheit mit dem schematisch dargestellten Antriebsmotor 2 aufgenommen, der über den im Gehäuse 23 aufgesteckten Akku 39 gespeist wird. Die Heckenschere ist eine elektrische Heckenschere, insbesondere eine akkubetriebene Heckenschere. Zum Halten und Führen des Arbeitsgerätes 1 weist das Gehäuse 23 den Handgriff 26 auf, der in Längsrichtung des Arbeitsgerätes 1 als ein hinterer Handgriff ausgebildet ist. Der am Gehäuse 23 angeordnete Sperrhebel 5 ist lediglich schematisch in Form eines gestrichelten Rechteckes dargestellt. Zudem ist am Gehäuse 23 der Betätigungshebel 4 angeordnet.

In Fig. 12 ist ausschnittsweise der Teil des Gehäuses 23 des erfindungsgemäßen Arbeitsgerätes 1 nach Fig. 11 dargestellt, der den Handgriff 26 umfasst und an dem der Sperrhebel 5 sowie der Betätigungshebel 4 angeordnet sind. Der Handgriff 26 geht an seinem hinteren Ende 29, also dem vom Sperrhebel 5 abgewandten Ende des Handgriffes 26, in einen Grundkörper 73 des Gehäuses 23 über. Das Arbeitsgerät 1 umfasst einen Handanschlag 50, über den der Handgriff 26 an seinem vorderen Ende 28 in den Grundkörper 73 des Gehäuses 23 übergeht. Der Handanschlag 50 ist am Gehäuse 23 am vorderen Ende 28 des Handgriffes 26 ausgebildet und erstreckt sich in Richtung vom Betätigungshebel 4 zum Handgriff 26 vom Handgriff 26 weg. Der Handanschlag 50 bildet in Richtung der Längsachse 18 des Handgriffes 26 nach vorne einen Anschlag für die Hand des Bedieners. Der Handanschlag 50 dient zur Anlage des Daumensattels des Bedieners. Benachbart zum Handanschlag 50 ist der Sperrhebel 5 angeordnet.

Wie in Fig. 12 gezeigt, schließen in Blickrichtung senkrecht auf die Längsebene 27 die Längsachse 18 des Handgriffes 26 und die Drehachse 8 des Sperrhebels 5 den Winkel α ein, der vom Grundkörper 73 des Gehäuses 23 weg öffnet. Im Ausführungsbeispiel liegt der Winkel α in einem Bereich von 10° bis 60°, vorzugsweise von 15° bis 45°. Der Winkel α beträgt insbesondere in etwa 15° in Blickrichtung senkrecht auf die Längsebene 27.

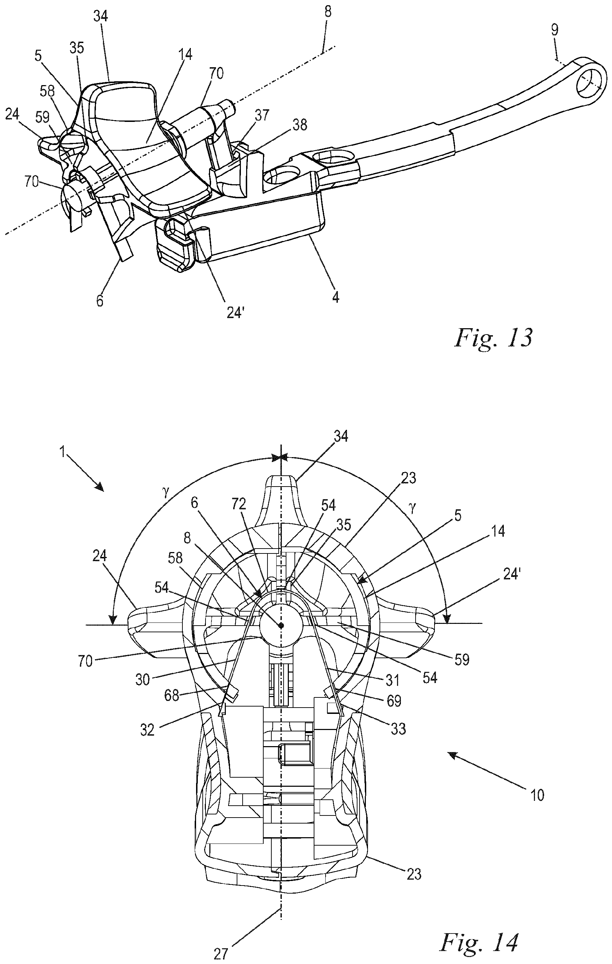

Wie in den Figuren 13 und 14 gezeigt, unterscheidet sich der Sperrhebel 5 gegenüber dem Sperrhebel 5 nach dem Ausführungsbeispiel gemäß Fig. 1 im Wesentlichen darin, dass der Sperrhebel 5 drei Flügelelemente 24, 24', 34 (Fig. 14) aufweist. Das erfindungsgemäße Arbeitsgerät mit einem derartigen Sperrhebel 5 mit drei Flügelelementen 24, 24', 34 kann auch in alternativer Ausführung beispielsweise als Motorsäge, Blasgerät oder dgl. ausgebildet sein. Das Arbeitsgerät 1 kann zudem auch als Arbeitsgerät mit Schaft, beispielsweise als Hochentaster, Heckenschneider, Freischneider, Rasentrimmer, Motorsense oder dgl. ausgebildet sein. Zwischen den seitlichen Flügelelementen 24, 24' ist ein weiteres, oberes Flügelelement 34 am Sperrhebel 5 angeordnet. Die Flügelelemente 24, 24', 34 umfassen in Blickrichtung der Längsachse 18 ein oberes Flügelelement 34 und zwei seitliche Flügelelemente 24, 24'. Das obere Flügelelement 34 liegt in Umfangsrichtung zwischen den beiden seitlichen Flügelelementen 24, 24'. Das obere Flügelelement 34 der drei Flügelelemente 24, 24', 34 ist dem Betätigungshebel 4 bezüglich der Drehachse 8 des Sperrhebels 5 gegenüberliegend am Sperrhebel 5 angeordnet. Die zwei seitlichen Flügelelemente 24, 24' der drei Flügelelemente 24, 24', 34 des Sperrhebels 5 sind bezüglich der Längsebene 27 einander gegenüberliegend am Sperrhebel 5, insbesondere spiegelsymmetrisch angeordnet. Die zwei seitlichen Flügelelemente 24, 24' des Sperrhebels 5 weisen einen gleichen Winkelabstand γ um die Drehachse 8 des Sperrhebels 5 zum oberen Flügelelement 34 auf. Der Winkelabstand γ beträgt im Ausführungsbeispiel mindestens 60°, insbesondere mindestens 70°, vorzugsweise in etwa 90°. Im bevorzugten Ausführungsbeispiel sind die Flügelelemente 24, 24', 34 an der Umfangswand 14 des Sperrhebels 5 ausgebildet. Demnach sind die Flügelelemente 24, 24', 34 am Sperrhebel 5 einteilig ausgebildet. Wie in Fig. 12 gezeigt, weist das Gehäuse 23 eine Nut 51 auf, die sich mindestens um 180° um die Drehachse 8 des Sperrhebels 5 erstreckt. Der Sperrhebel 5 ist in der Nut 51 angeordnet, wobei die Flügelelemente 24, 24', 34 aus der Nut 51 herausragen und dadurch für den Bediener von außerhalb des Gehäuses 23 gut zugänglich sind. Der Sperrhebel 5 weist lediglich einen Wandabschnitt 58 auf, der über den Mittelsteg 59 und den Verbindungssteg 35 mit einer Welle 70 des Sperrhebels 5 verbunden ist. An dem Wandabschnitt 58 sind alle drei Flügelelemente 24, 24', 34 ausgebildet.

Beim Einsatz beispielsweise einer Heckenschere werden zum Schneiden einer Hecke neben horizontalen Schnitten auch vertikale Schnitte durchgeführt. Bei derartigen vertikalen Schnitten ist die Heckenschere zu drehen, so dass ihre Schnittebene 62 vertikal ausgerichtet ist. Die Heckenschere wird dann vom Bediener in einer Auf- und Abbewegung geführt. Üblicherweise ändert der Bediener dabei die Handhaltung gegenüber der Handhaltung für horizontale Schnitte, nämlich in eine um 90° verdrehte Handhaltung, so dass ein Abknicken des Handgelenkes nicht notwendig ist. Bei einer derart verdrehten Handhaltung ermöglicht das zusätzliche, obere Flügelelement 34 eine einfache, ergonomische Entsperrung des Betätigungshebels 4. Der Sperrhebel 5 kann über das obere Flügelelement 34 auf einfache Weise mit dem Daumen betätigt werden.

Wie in Fig. 14 gezeigt, umfasst das hier gezeigte Ausführungsbeispiel für ein Arbeitsgerät 1 eine gegenüber dem Ausführungsbeispiel nach Fig. 1 alternative Gestaltung einer Federeinheit 6. Die Federeinheit 6 spannt den Sperrhebel 5 in Richtung der Sperrstellung 10 vor. Die Federeinheit 6 ist als Blattfeder ausgebildet, kann jedoch in einer alternativen Ausführung auch als Schenkelfeder oder dgl. ausgebildet sein oder mehrere Federn umfassen. Die Federeinheit 6 umfasst einen ersten Federschenkel 30 und einen zweiten Federschenkel 31. Die Federschenkel 30, 31 sind über einen bogenförmigen Abschnitt 72 der Federeinheit 6 verbunden. Demnach besitzt die Federeinheit 6 in etwa eine V-Form. Die Federeinheit 6 ist im Ausführungsbeispiel einteilig ausgebildet. Die Federeinheit 6 ist an dem Sperrhebel 5 eingespannt. Dabei ragen die Federschenkel 30, 31 aus der Umfangswand des Sperrhebels 5 und sind in der Sperrstellung in Richtung auf den Betätigungshebel 4 zu gerichtet. Der bogenförmige Abschnitt 72 der Federeinheit 6 verläuft um einen Teil des Umfangs der Welle 70 des Sperrhebels 5. Die Federeinheit 6 ist zudem über drei Führungen 54 am Sperrhebel 5 eingespannt. Dabei sind zwei der drei Führungen 54 bezüglich der Längsebene 27 einander gegenüberliegend am Mittelsteg 59 ausgebildet. Die weitere Führung 54 ist an dem Verbindungssteg 35 des Sperrhebels 5 ausgebildet. Die Führungen 54 sind jeweils als Schlitz, insbesondere als Öffnung ausgebildet. Die Federeinheit ist in den Führungen 54, insbesondere in den am Mittelsteg 59 vorgesehenen Führungen 54 vorgespannt eingeklemmt.

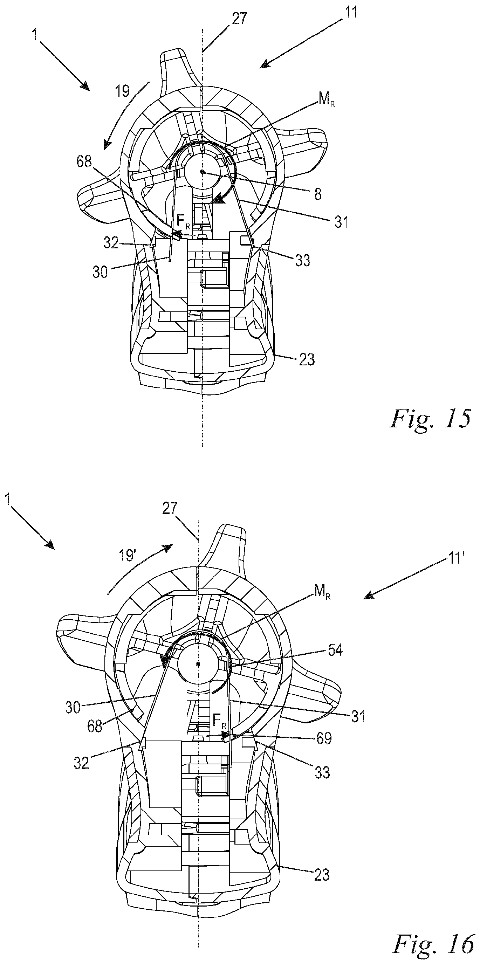

Wie in den Figuren 14 bis 16 gezeigt, bildet das Gehäuse 23 einen ersten Drehanschlag 32 und einen zweiten Drehanschlag 33. Am Sperrhebel 5 sind eine erste Anschlagsfläche 68 und eine zweite Anschlagsfläche 69 ausgebildet. Im bevorzugten Ausführungsbeispiel sind die Anschlagsflächen 68, 69 an den Enden des Wandabschnittes 58 ausgebildet. Die Federeinheit 6 ist gegenüber dem Gehäuse 23 derart angeordnet, dass beim Schwenken des Sperrhebels 5 in die erste Schwenkrichtung 19 der erste Federschenkel 30 der Federeinheit 6 von der ersten Anschlagsfläche 68 des Sperrhebels 5 in Richtung der Längsebene 27 ausgelenkt wird. Die Federeinheit 6 ist dabei über den zweiten Federschenkel 31 an dem zweiten Drehanschlag 33 des Gehäuses 23 abgestützt (Fig. 15). Die Federeinheit 6 wirkt auf die Anschlagsfläche 68 des Sperrhebels 5 mit einer Federkraft. Im Ausführungsbeispiel liegt der zweite Federschenkel 31 in etwa plan an der Anschlagsfläche 68 an, wodurch die Federkraft in etwa der auf den Sperrhebel wirkenden Rückstellkraft F_{R} entspricht. Die Rückstellkraft F_{R} erzeugt wiederum das Rückstellmoment M_{R}, durch welches der Sperrhebel 5 aus der Freigabestellung 11 wieder zurück in die Sperrstellung 10 geschwenkt wird. Wird der Sperrhebel 5 in die zweite Schwenkrichtung 19' ausgelenkt, wird der zweite Federschenkel 31 über die zweite Anschlagsfläche 69 des Sperrhebels 5 in Richtung zur Längsebene 27 ausgelenkt. Dabei ist die Federeinheit 6 über den ersten Federschenkel 30 an dem ersten Drehanschlag 32 des Gehäuses 23 abgestützt (Fig. 16). Die Ausbildung der wirkenden Kräfte erfolgt analog dem ersten Federschenkel 30. Die Rückstellkraft F_{R} ist in beiden Schwenkrichtungen 19, 19' bei betragsmäßig gleicher Auslenkung betragsmäßig gleich groß. Die Federeinheit 6 ist zur Längsebene 27 symmetrisch ausgebildet. Auch der Sperrhebel 5 ist zur Längsebene 27 symmetrisch ausgebildet. Dadurch werden für die beiden unterschiedlichen Schwenkrichtungen 19, 19' betragsmäßig gleich große Rückstellkräfte F_{R} und betragsmäßig gleich große Rückstellmomente M_{R} erzeugt.

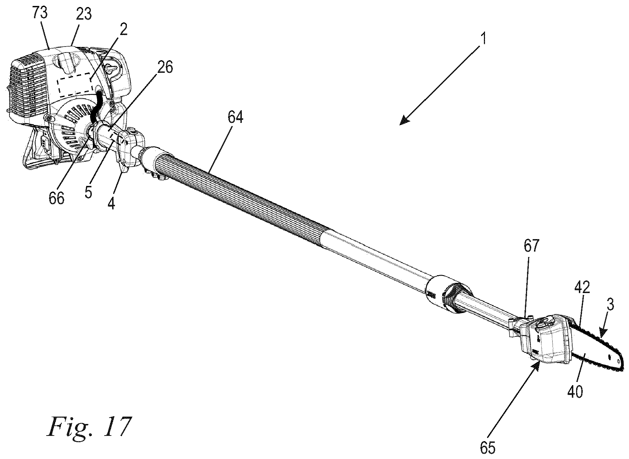

In Fig. 17 ist als alternatives Ausführungsbeispiel eines erfindungsgemäßen Arbeitsgerätes 1 ein Hochentaster gezeigt. Gleiche Bezugszeichen gemäß dem Ausführungsbeispiel nach den Figuren 1 bis 10 sowie dem Ausführungsbeispiel nach den Figuren 11 bis 16 bezeichnen einander entsprechende Bauteile. Das Arbeitsgerät 1 umfasst die Antriebseinheit, die über einen Schaft, welcher ein Führungsrohr 64 umfasst, mit einem Schneidkopf 65 verbunden ist. Der Schaft bzw. das Führungsrohr 64 bilden einen Teil des Gehäuses 23. Die Antriebseinheit ist in dem Gehäuse 23 angeordnet und umfasst den schematisch dargestellten Antriebsmotor 2. Der Antriebsmotor 2 ist im Ausführungsbeispiel als ein Verbrennungsmotor ausgebildet. In einer bevorzugten alternativen Ausführung des erfindungsgemäßen Arbeitsgerätes 1 ist der Antriebsmotor 2 ein Elektromotor. Es kann auch vorgesehen sein, dass der Antriebsmotor 2 am Schneidkopf 65 angeordnet ist, insbesondere, wenn der Antriebsmotor 2 ein Elektromotor ist. Im Gehäuse 23 kann dann beispielsweise ein Akku 39 zur Versorgung des Antriebsmotors 2 mit Energie vorgesehen sein. Das Führungsrohr 64 ist im Ausführungsbeispiel als Teleskoprohr ausgebildet. Das Führungsrohr 64 besitzt ein erstes Ende 66, an dem die Antriebseinheit festgelegt ist. Benachbart zum ersten Ende 66 des Führungsrohrs 64 ist der Handgriff 26 am Führungsrohr 64 festgelegt. Am Handgriff 26 sind der Betätigungshebel 4 sowie der schematisch dargestellte Sperrhebel 5 gelagert. An einem zweiten Ende 67 des Führungsrohrs 64 ist der Schneidkopf 65 angeordnet. Durch das Führungsrohr 64 kann eine Antriebswelle ragen, wenn der Antriebsmotor 2 im Grundkörper 73 des Gehäuses 23 angeordnet ist. Ist der Antriebsmotor 2 am Schneidkopf 65 angeordnet, so verlaufen durch das Führungsrohr 64 vorteilhaft Energie- und Signalleitungen.

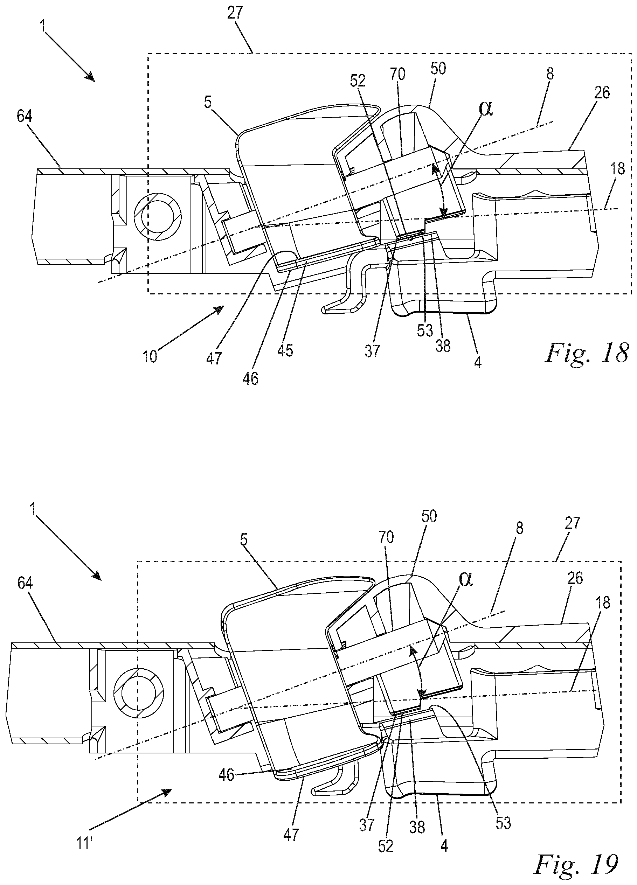

In den Figuren 18 und 19 sind in einer seitlichen, ausschnittsweisen Schnittdarstellung des Arbeitsgerätes 1 nach Figur 17 das Führungsrohr 64, der Handgriff 26 sowie der Betätigungshebel 4 und der Sperrhebel 5 gezeigt. Auch in diesem erfindungsgemäßen Ausführungsbeispiel des Arbeitsgerätes 1 schließen die Längsachse 18 des Handgriffes 26 und die Drehachse 8 des Sperrhebels 5 in Blickrichtung senkrecht auf die Längsebene 27 den Winkel α ein. Der Winkel α liegt in einem Bereich zwischen 10° und 60°, vorzugsweise zwischen 15° und 45°. Der Winkel α beträgt im Ausführungsbeispiel insbesondere in etwa 15°.

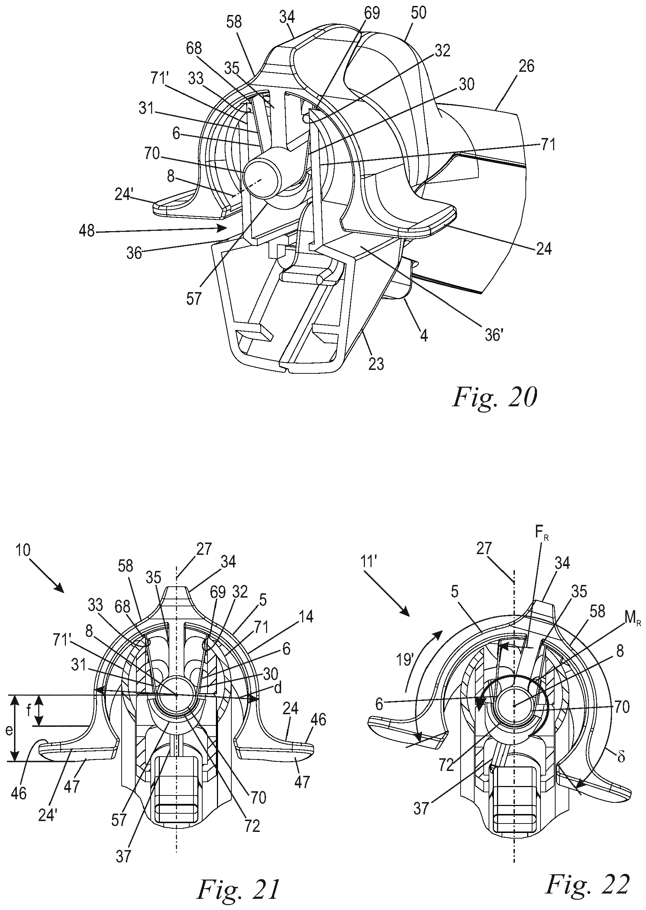

Wie in den Figuren 20 bis 22 gezeigt, weist der Sperrhebel 5 eine Welle 70 auf, die im Gehäuse 23 um die Drehachse 8 des Sperrhebels 5 schwenkbar gelagert ist. Der Wandabschnitt 58 ist über den Verbindungssteg 35 mit der Welle 70 verbunden. Der Verbindungssteg 35 liegt in Sperrstellung 10 des Sperrhebels 5 in der Längsebene 27. Im Ausführungsbeispiel sind die Welle 70 und der Sperrhebel 5 einteilig ausgebildet. Die Welle 70 umfasst einen Fortsatz, an welchem die Fahne 37 ausgebildet ist. Wie in den Figuren 18, 21 gezeigt, wird der Betätigungshebel 4 in seiner Schwenkrichtung zum Betätigen des Antriebsmotors 2 durch die Fahne 37 der Welle 70 blockiert. Bei Betätigung des Betätigungshebels 4 kontaktieren sich die Stirnfläche 52 der Fahne 37 und die Gegenstirnfläche 53 der Gegenfahne 38. Der Betätigungshebel 4 ist gesperrt. Der Sperrhebel 5 befindet sich in der Sperrstellung 10. In den Figuren 19 und 22 ist der Sperrhebel 5 in die zweite Schwenkrichtung 19' geschwenkt, so dass die Fahne 37 die Gegenfahne 38 freigibt. Der Betätigungshebel 4 kann betätigt, also in Richtung der Drehachse 8 des Sperrhebels 5 gedrückt werden, ohne dass sich die Fahne 37 und die Gegenfahne 38 kontaktieren. Der Sperrhebel 5 befindet sich in der zweiten Freigabestellung 11'.

Wie in den Figuren 20 bis 22 gezeigt, sind an dem Sperrhebel 5 die drei Flügelelemente 24, 24', 34 ausgebildet. Der Sperrhebel 5 unterscheidet sich von dem in Fig. 12 gezeigten Sperrhebel 5 darin, dass in Sperrstellung 10 sowohl der maximale Abstand e als auch der minimale Abstand f zwischen den seitlichen Flügelelementen 24, 24' und der Drehachse 8 des Sperrhebels 5 größer ist. Der maximale Abstand e entspricht mindestens 15%, vorzugsweise mindestens 25%, insbesondere in etwa 30% des Durchmessers d des Sperrhebels 5. Der minimale Abstand f entspricht mindestens 5%, insbesondere mindestens 10% des Durchmessers d des Sperrhebels 5. Der Wandabschnitt 58 erstreckt sich über den Winkel δ (Fig. 22) um die Drehachse 8 des Sperrhebels 5, wobei der Winkel δ mindestens 180°, insbesondere mindestens 200°, vorzugsweise in etwa 250° beträgt.

Derartige Arbeitsgeräte 1 mit Schaft, insbesondere Hochentaster oder Heckenschneider werden für Schneidvorgänge an Bäumen oder hohen Hecken verwendet. Der Bediener hält das Arbeitsgerät 1 dabei derart, dass der Schaft in die Höhe zeigt. Dadurch muss der Handgriff 26 in einer angewinkelten Stellung gehalten werden. Es hat sich gezeigt, dass es für den Bediener angenehm ist, wenn der Daumen einen großen Abstand zur Drehachse 8 des Sperrhebels 5 in Richtung des Betätigungshebels 4 aufweist. Durch die tiefe Anordnung der seitlichen Flügelelemente 24, 24' an dem Sperrhebel 5 sind die Abstände e, f der seitlichen Flügelelemente 24, 24' zur Drehachse des Sperrhebels 5 deutlich erhöht. Dadurch stellt sich eine entspannte Griffhaltung für den Bediener ein, insbesondere bei einer angewinkelten Handstellung.

In den Figuren 20 bis 22 ist die Federeinheit 6 gezeigt, die sich in ihrer Einbaulage gegenüber der Federeinheit des Ausführungsbeispiels nach Fig. 12 unterscheidet. Die Federeinheit 6 weist ebenfalls einen ersten Federschenkel 30 und einen zweiten Federschenkel 31 auf, die über einen bogenförmigen Abschnitt 72 miteinander verbunden sind. Die Federeinheit 6 besitzt in etwa eine V-Form. Die Federeinheit 6 ist jedoch bezüglich der Drehachse 8 des Sperrhebels 5 um 180° verdreht eingebaut. Die Federschenkel 30, 31 verlaufen vom Betätigungshebel 4 weg in Richtung oberes Flügelelement 34. Die Federeinheit 6 ist zwischen der Welle 70 des Sperrhebels 5 und einer für den Sperrhebel 5 vorgesehenen Wellenaufnahme 57 eingespannt. Die Federschenkel 30, 31 erstrecken sich in etwa bis zur Innenseite des Sperrhebels 5. An der Innenseite des Sperrhebels 5 sind die Anschlagsflächen 68, 69 zum Abstützen der Federschenkel 30, 31 ausgebildet. Der erste Drehanschlag 32 sowie der zweite Drehanschlag 33 sind durch das Gehäuse 23, insbesondere durch den Grundkörper des Gehäuses 23 oder durch Aussparungen im Führungsrohr 64, ausgebildet. Das Gehäuse 23 erstreckt sich über zwei Stege 71, 71' in den Innenraum des Sperrhebels 5. Die Stege 71, 71' sind bezüglich der Längsebene 27 gegenüberliegend ausgebildet. Die zwei Stege 71, 71' erstrecken sich in etwa bis zu den zwei Anschlagsflächen 68, 69, ohne diese jedoch zu kontaktieren. An den Enden der Stege 71, 71' sind die Drehanschläge 32, 33 ausgebildet. In einer alternativen, erfindungsgemäßen Ausführung sind die Drehanschläge 32, 33 entweder durch den Grundkörper des Gehäuses 23 oder durch das Führungsrohr 64 gebildet.

Wie auch im Ausführungsbeispiel nach Fig. 12 blockiert der erste Drehanschlag 32 die Drehbewegung des ersten Federschenkels 30 in die zweite Schwenkrichtung 19'. Dabei bewirkt die Federeinheit 6 über ihren zweiten Federschenkel 31 auf den Sperrhebel 5 eine Rückstellkraft F_{R}, die den Sperrhebel 5 zurück in seine Sperrstellung 10 vorspannt. Der erste Federschenkel 30 ist an dem ersten Drehanschlag 32 abgestützt, wobei der zweite Federschenkel 32 über die erste Anschlagsfläche 68 des Sperrhebels 5 auf den Sperrhebel 5 wirkt. Der zweite Drehanschlag 33 begrenzt eine Drehbewegung des zweiten Federschenkels 31 in die erste Schwenkrichtung 19. Der zweite Federschenkel 31 wird entsprechend an dem zweiten Drehanschlag 33 ausgelenkt. Der erste Federschenkel 30 bewirkt eine Rückstellkraft F_{R}, die den Sperrhebel 5 über die zweite Anschlagsfläche 69 entgegen der ersten Schwenkrichtung 19 zurück in die Sperrstellung 10 vorspannt, wobei der erste Federschenkel 30 an dem ersten Drehanschlag 32 abgestützt ist. Gegenüber dem Sperrhebel 5 sind die Federschenkel 30, 31 an den an der Innenseite des Sperrhebels 5 ausgebildeten Anschlagsflächen 68, 69 eingespannt. Die Federeinheit 6 ist in der Sperrstellung 10 insbesondere zwischen der Welle 70 und der Wellenaufnahme 57 sowie zwischen den beiden Anschlagsflächen 68, 69 eingeklemmt vorgespannt.

## Patentansprüche

1. Handgeführtes Arbeitsgerät, mit einem Werkzeug (3) und mit einem Antriebsmotor (2) zum Antrieb des Werkzeugs (3), mit einem Handgriff (26), wobei der Handgriff (26) eine Längsachse (18) aufweist, mit einem Betätigungshebel (4) zur Bedienung des Antriebsmotors (2), mit einem Sperrhebel (5) für den Betätigungshebel (4), wobei der Sperrhebel (5) um eine Drehachse (8) des Sperrhebels (5) schwenkbar gelagert ist, und mit einer Längsebene (27), wobei die Längsebene (27) die Längsachse (18) des Handgriffes (26) enthält und parallel zur Drehachse (8) des Sperrhebels (5) verläuft, wobei der Sperrhebel (5) den Betätigungshebel (4) in einer Sperrstellung (10) sperrt und in mindestens einer Freigabestellung (11, 11') zur Betätigung freigibt,
**dadurch gekennzeichnet, dass** die Längsachse (18) des Handgriffes (26) mit der Drehachse (8) des Sperrhebels (5) in Blickrichtung senkrecht auf die Längsebene (27) einen Winkel (α) einschließt, wobei der Winkel (α) in einem Bereich von 10° bis 60° liegt.

2. Handgeführtes Arbeitsgerät nach Anspruch 1,
**dadurch gekennzeichnet, dass** der Winkel (α) in einem Bereich von 15° bis 45° liegt.

3. Handgeführtes Arbeitsgerät nach einem der Ansprüche 1 bis 2,
**dadurch gekennzeichnet, dass** zwei Freigabestellungen (11, 11') vorgesehen sind und dass der Sperrhebel (5) ausgehend von seiner Sperrstellung (10) in einer ersten Schwenkrichtung (19) um die Drehachse (8) des Sperrhebels (5) in die erste Freigabestellung (11) und in einer der ersten Schwenkrichtung (19) entgegengerichteten zweiten Schwenkrichtung (19') in die zweite Freigabestellung (11') schwenkbar ist.

4. Handgeführtes Arbeitsgerät nach Anspruch 3,
**dadurch gekennzeichnet, dass** eine Federeinheit (6) bei einer Winkelauslenkung des Sperrhebels (5) ausgehend von der Sperrstellung (10) eine Rückstellkraft bewirkt, die in erster Schwenkrichtung (19) und in zweiter Schwenkrichtung (19') bei gleicher Winkelauslenkung betragsmäßig gleich groß ist.

5. Handgeführtes Arbeitsgerät nach einem der Ansprüche 1 bis 4,
**dadurch gekennzeichnet, dass** der Sperrhebel (5) mindestens zwei Flügelelemente (24, 24') zur Betätigung des Sperrhebels (5) aufweist, wobei die mindestens zwei Flügelelemente (24, 24') bezüglich der Längsebene (27) einander gegenüberliegend angeordnet sind.

6. Handgeführtes Arbeitsgerät nach Anspruch 5,
**dadurch gekennzeichnet, dass** die Flügelelemente (24, 24') in Sperrstellung (10) sowohl von der in erster Schwenkrichtung (19) als auch von der in zweiter Schwenkrichtung (19') liegenden Seite aus zugänglich sind.

## Claims

1. Handheld work apparatus, having a tool (3) and having a drive motor (2) for driving the tool (3), having a handle (26), wherein the handle (26) has a longitudinal axis (18); having an activation lever (4) for operating the drive motor (2); having a blocking lever (5) for the activation lever (4), wherein the blocking lever (5) is mounted so as to be pivotable about a rotation axis (8) of the blocking lever (5); and having a longitudinal plane (27), wherein the longitudinal plane (27) contains the longitudinal axis (18) of the handle (26) and runs parallel to the rotation axis (8) of the blocking lever (5); wherein the blocking lever (5) blocks the activation lever (4) in a blocking position (10) and releases said activation lever (4) for activation in at least one releasing position (11, 11'),
**characterized in that** the longitudinal axis (18) of the handle (26), when viewed perpendicularly onto the longitudinal plane (27), conjointly with the rotation axis (8) of the blocking lever (5) includes an angle (α), wherein the angle (α) is in a range from 10° to 60°.

2. Handheld work apparatus according to Claim 1,
**characterized in that** the angle (α) is in a range from 15° to 45°.

3. Handheld work apparatus according to one of Claims 1 to 2,
**characterized in that** two releasing positions (11, 11') are provided, and **in that** the blocking lever (5), proceeding from its blocking position (10), is pivotable in a first pivoting direction (19) about the rotation axis (8) of the blocking lever (5) to the first releasing position (11), and in a second pivoting direction (19'), directed counter to the first pivoting direction (19), is pivotable to the second releasing position (11').

4. Handheld work apparatus according to Claim 3,
**characterized in that** in the event of an angular deflection of the blocking lever (5), a spring unit (6) effects a restoring force proceeding from the blocking position (10), said restoring force being of identical value in the first pivoting direction (19) and in the second pivoting direction (19') at the same angular deflection.

5. Handheld work apparatus according to one of Claims 1 to 4,
**characterized in that** the blocking lever (5) has at least two wing elements (24, 24') for activating the blocking lever (5), wherein the at least two wing elements (24, 24') are disposed so as to be mutually opposite in terms of the longitudinal plane (27).

6. Handheld work apparatus according to Claim 5,
**characterized in that** the wing elements (24, 24') in the blocking position (10) are accessible from the side lying in the first pivoting direction (19) as well as from the side lying in the second pivoting direction (19').

## Revendications

1. Appareil de travail portatif, avec un outil (3) et avec un moteur d'entraînement (2) pour l'entraînement de l'outil (3), avec une poignée (26), la poignée (26) présentant un axe longitudinal (18), avec un levier d'actionnement (4) pour la commande du moteur d'entraînement (2), avec un levier de blocage (5) pour le levier d'actionnement (4), le levier de blocage (5) étant monté de manière pivotante autour d'un axe de rotation (8) du levier de blocage (5), et avec un plan longitudinal (27), le plan longitudinal (27) contenant l'axe longitudinal (18) de la poignée (26) et s'étendant parallèlement à l'axe de rotation (8) du levier de blocage (5), le levier de blocage (5) bloquant le levier d'actionnement (4) dans une position de blocage (10) et le libérant pour l'actionnement dans au moins une position de libération (11, 11'),
**caractérisé en ce que** l'axe longitudinal (18) de la poignée (26) forme un angle (α) avec l'axe de rotation (8) du levier de blocage (5) dans la direction d'observation perpendiculairement au plan longitudinal (27), l'angle (α) étant situé dans une plage de 10° à 60°.

2. Appareil de travail portatif selon la revendication 1,
**caractérisé en ce que** l'angle (α) est situé dans une plage de 15° à 45°.

3. Appareil de travail portatif selon l'une quelconque des revendications 1 à 2, **caractérisé en ce que** deux positions de libération (11, 11') sont prévues et **en ce que** le levier de blocage (5) peut pivoter à partir de sa position de blocage (10) dans une première direction de pivotement (19) autour de l'axe de rotation (8) du levier de blocage (5) dans la première position de libération (11) et dans une deuxième direction de pivotement (19') opposée à la première direction de pivotement (19) dans la deuxième position de libération (11').

4. Appareil de travail portatif selon la revendication 3,
**caractérisé en ce qu'**une unité à ressort (6) provoque, lors d'une déviation angulaire du levier de blocage (5) à partir de la position de blocage (10), une force de rappel qui est de même valeur dans la première direction de pivotement (19) et dans la deuxième direction de pivotement (19') pour une même déviation angulaire.

5. Appareil de travail portatif selon l'une quelconque des revendications 1 à 4, **caractérisé en ce que** le levier de blocage (5) présente au moins deux éléments d'ailette (24, 24') pour actionner le levier de blocage (5), les au moins deux éléments d'ailette (24, 24') étant agencés en face l'un de l'autre par rapport au plan longitudinal (27).

6. Appareil de travail portatif selon la revendication 5,
**caractérisé en ce que** les éléments d'ailette (24, 24') sont accessibles en position de blocage (10) aussi bien du côté situé dans la première direction de pivotement (19) que du côté situé dans la deuxième direction de pivotement (19').
